# EUROPEAN PATENT APPLICATION

(11) **EP 3 040 581 A1**
(43) Date of publication of application: **06.07.2016**
(21) Application number: 15305004.2
(22) Date of filing: 05.01.2015
(51) Int. Cl.: F16H 7/20, F16H 55/36, F16C 33/72, F16C 33/78, F16C 35/073, F16C 13/00

(54) **Pulley device for a drive element**

(71) Applicant: Aktiebolaget SKF, 415 50 Göteborg (SE)
(72) Inventor: Prouteau, Thierry, 37100 TOURS (FR)
(74) Representative: Myon, Gérard Jean-Pierre

(57) **Abstract**

This pulley device (2) comprises at least one sleeve (4 , 6), that is configured to receive a screw for fastening the pulley device to a support, at least one rolling bearing (8, 10), arranged coaxially around the sleeve and comprising an inner ring (82, 102) and an outer ring (80, 100), and a pulley (12), that is adapted to cooperate with the drive element and that is secured in rotation, around a central axis (X2), with the outer ring of each roller bearing. The pulley device further comprises a sealing flange (64), that extends on the side of the bearing in a centrifugal direction at least up to the outer ring (100) or in a centripetal direction at least to the inner ring, and the sleeve (4 , 6) delimits a housing (62) for receiving the screw head.

## Description

### TECHNICAL FIELD OF THE INVENTION

The invention concerns a pulley device for a drive element, such as a chain or a belt. In particular, this pulley device is adapted to be fixedly mounted on an engine body.

### BACKGROUND OF THE INVENTION

DE-A-10 2005 002 029 discloses a pulley device having a bipartite sleeve configured to receive a screw for fastening the device to a support structure, a roller bearing arranged coaxially around the sleeve and a pulley that is adapted to cooperate with a drive element. The roller bearing has an inner ring and an outer ring that delimit between them a rolling chamber for receiving rolling elements. In operating conditions, the pulley is driven in rotation around a central axis that is superimposed with the sleeve axis. The pulley is secured in rotation with the outer ring of the roller bearing. A first part of the sleeve has a shoulder, while a second part has an end retaining flange. The roller bearing is retained between the shoulder and the end flange. The screw head bears against an axial extremity of the second part of the sleeve, so that the roller bearing is caught in vise between the two parts of the sleeve. The flange of the second sleeve part is intended for axially retaining the roller bearing and not for sealing the rolling chamber from the outside. As a result, seal means are integrated in the roller bearing to protect the rolling from outside pollution.

EP-A-1 061 278 discloses a pulley device where a central sleeve includes a sealing flange that extends outwards up to the pulley, so as to protect the rolling chamber of the bearing from the outside. However, the sleeve of this pulley device is not designed for housing the screw head. Indeed, the screw head bears against an axial extremity of the sleeve. As a result, the pulley device is not axially compact.

### SUMMARY OF THE INVENTION

The invention intends to solve these drawbacks by proposing a compact pulley device wherein the rolling chamber of the rolling bearing is better protected from outside pollution.

To this end, the invention concerns a pulley device for a drive element, comprising at least one sleeve, that is configured to receive a screw for fastening the pulley device to a support, at least one rolling bearing, arranged coaxially around the sleeve and comprising an inner ring and an outer ring, and a pulley, that is adapted to cooperate with the drive element and that is secured in rotation, around a central axis, with the outer ring of each rolling bearing. According to the invention, the pulley device further comprises a sealing flange, that extends on a side of the bearing in a centrifugal direction at least up to the outer ring or in a centripetal direction at least to the inner ring, and the sleeve delimits a housing for receiving the screw head.

Thanks to the invention, the sealing flange covers the rolling chamber of the bearing, which means that the rolling chamber is protected from outside pollution. Furthermore, the sleeve is designed for housing the screw head so that the screw does not protrude axially from the sleeve, thereby resulting in a compact device.

According to further aspects of the invention, which are advantageous but not compulsory, such a pulley device may incorporate one or several of the following features:
- The sealing flange is integral with the sleeve and extends, centrifugally with respect to a central axis of the sleeve, towards the outer ring.
- A radial distance between the sealing flange and the pulley is comprised between 0.1 mm and 10 mm.
- The sealing flange does not contact the pulley nor the outer ring.
- The sealing flange is integral with the pulley and extends, centripetally with respect to a central axis of the pulley, towards the inner ring.
- A radial distance between the sealing flange and the sleeve is comprised between 0.1 mm and 10 mm
- The sealing flange does not contact the sleeve nor the inner ring.
- The sealing flange is disposed on the same side of the bearing than a housing for receiving the screw.
- The sleeve is bipartite.
- A first part of the sleeve is adapted to penetrate into a second part of the sleeve, while the first part of the sleeve includes an outer seal ring for axially retaining the first part within the second part.
- Each rolling bearing includes a rolling chamber for receiving a series of rolling elements that is delimited between the inner and outer ring, while each rolling bearing includes seal means for protecting the rolling chamber.
- The housing for receiving the screw head is formed by an internal beading of the sleeve.
- The sleeve includes an outer collar for axially retaining the or each rolling bearing.
- The pulley device includes two rolling bearings.

### BRIEF DESCRIPTION OF THE DRAWINGS

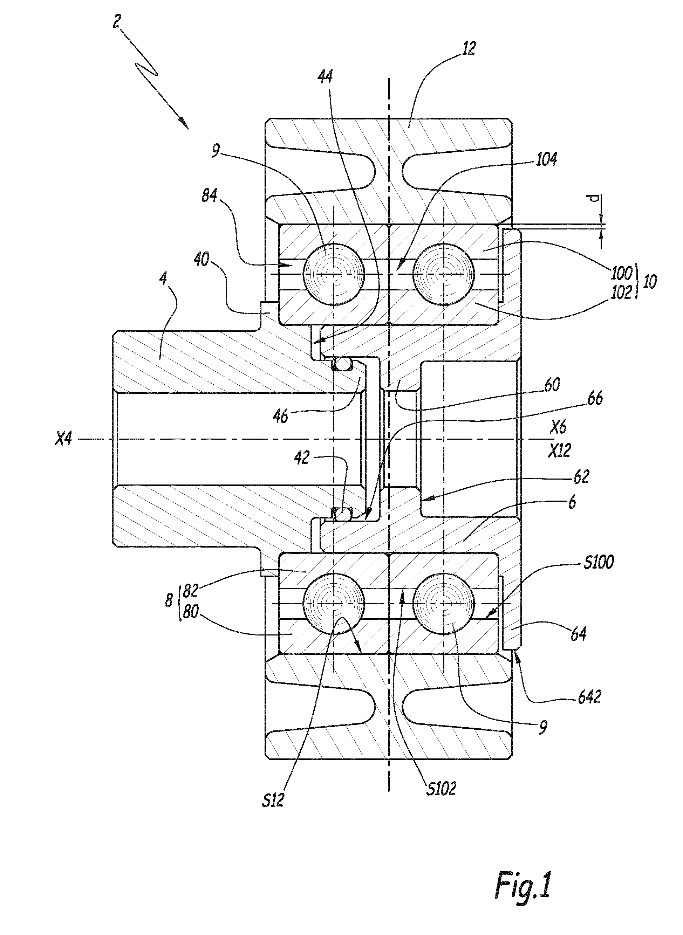

The invention will now be explained in correspondence with figure 1, which is a longitudinal section of a pulley device according to the invention, and as an illustrative example, without restricting the object of the invention.

Figure 1 represents a pulley device 2 that is designed for being secured to a non-represented support, such as an engine body.

The pulley device 2 includes a central sleeve that is bipartite. The central sleeve is configured to receive a non-represented screw for fastening the pulley device 2 to the support. The support then includes a threaded hole complementary to the screw. When the pulley device 2 is mounted on the engine body, the screw passes inside the sleeve and penetrates into the support threaded hole.

The sleeve is formed in two parts 4 and 6 that are respectively centered on axes X4 and X6. At assembled state of the pulley device 2, the axes X4 and X6 are superimposed, which means that the sleeve parts 4 and 6 are aligned in axial direction.

In the present description, forward and backward directions are directions parallel to axis X4 or X6. The backward direction is oriented to the left on figure 1, in the direction of the non-represented engine body, while the forward direction is oriented to the right on figure 1, in a direction opposite to the engine body. Thus, sleeve part 6 is located in front of sleeve part 4.

Rear sleeve part 4 includes a shoulder 44 forming a front portion 46 designed for penetrating into front sleeve part 6. Front portion 46 delimits a groove for receiving a seal ring 42. In assembled state of pulley device 2, seal ring 42 bears against the radial inner surface 66 of the front sleeve part 6, so that rear sleeve part 4 is axially retained by front sleeve part 6. Rear sleeve part 4 further includes an outer collar 40 that is located at the rear of the shoulder 44.

Front sleeve part 6 includes an internal beading 60 that delimits a housing 62 for receiving the screw head of the non-represented screw. Housing 62 is located on the front of internal beading 60. In assembled state of pulley device 2, the screw head contacts the front side wall of internal beading 60. The screw does not protrude from the axial end of front sleeve part 6, thereby resulting in a compact pulley device. Front sleeve part 6 further includes a sealing flange 64 that extends radially, in a centrifugal direction with respect to axis X6. Sealing flange 64 is located at the front extremity of sleeve part 6 for compactness reason. Sealing flange 64 is integral with the sleeve part 6 and extends over the whole circumference of the latter.

Pulley device 2 also includes two rolling bearings 8 and 10 that are arranged coaxially around sleeve parts 4 and 6. Rolling bearing 8 and 10 include each an inner ring, respectively 82 or 102, an outer ring, respectively 80 or 100, and a rolling chamber 84 or 104 for receiving rolling elements 9, that is delimited between inner and outer rings. In the example, rolling elements 9 are balls, but they may also be rollers or needles. In a preferred and not illustrated embodiment of the invention, rolling bearing 8 or 10 include seal means for avoiding the leakage of lubricant contained in their rolling chambers 84 and 104. For instance, seal means may comprise a seal flange that is secured to the rotating ring or to the stationary ring of rolling bearing. Rolling bearing 10 is disposed in front of rolling bearing 8.

Rolling bearings 8 and 10 are axially retained between outer collar 40 and sealing flange 64. When tightening the screw into the complementary threaded hole, the screw head bears against the front side wall of internal beading 60, thereby pushing front sleeve part 6 backwards. As a result, rolling bearings 8 and 10 are caught in a vise between outer collar 40 and sealing flange 64.

A pulley 12 is arranged coaxially around rolling bearings 8 and 10. Pulley 12 is adapted to cooperate with a non-represented drive element, such as a rope, a cable, a chain or a belt. Pulley 12 has a I-shaped section and is designed for rotating around an axis X12, that is superimposed with axes X4 and X6, when the drive element is pulled. Pulley 12 is secured in rotation with outer rings 80 and 100 of rolling bearings 8 and 10. As a result, outer ring 80 or 100 of rolling bearing 8 or 10 forms a rotating ring, while the inner ring 82 or 102 of rolling bearing 8 or 10 forms a stationary ring. Pulley 12 may be secured to outer rings by any suitable means. For instance, the internal surface of pulley 12 may be provided with ribs configured to penetrate in complementary grooves delimited in the external surface of bearings outer rings 80 and 100.

Sealing flange 64 is arranged at the front side of bearing 10, that is at the same side than the housing 62 for receiving the screw head, and extends radially up to outer ring 100 of front rolling bearing 10, so that it covers rolling chamber 104 of rolling bearing 10. This means that a free radial edge 642 of sealing flange 64 is radially flush with the internal surface S100 of the outer ring 100 or, as in the illustrated example, projects radially beyond the internal surface S100 in a centrifugal direction with respect to axis X6. The sealing flange 64 protects the rolling chamber 104 from outside pollution so that there is less need for additional sealing means intrinsic to roller bearing 10. In practice, sealing flange 64 extends up to an immediate vicinity of the pulley 12. This means that a distance d, measured radially, between free radial edge 642 of sealing flange 64 and an internal surface S12 of pulley 12 is between 0.1 mm and 10 mm.

In a non-represented alternative embodiment, sealing flange 64 extends up to pulley 12. This means that the free radial edge 642 of sealing flange 64 is radially flush with internal surface S12 of pulley 12 or projects radially beyond this internal surface in a centrifugal direction. This means that sealing flange 64 extends on the side of pulley 12.

Sealing flange 64 does not contact the outer ring 100 nor the pulley 12, as this would induce friction.

In another non-represented alternative embodiment, sealing flange is integral with pulley 12. In this case, the sealing flange extends then radially in a centripetal direction with respect to axis X12. Further, the sealing flange extends at least up to inner ring 102 of rolling bearing 10. This means that the free radial end of the sealing flange is radially flush with the external S102 surface of the inner ring 102 or projects radially beyond this internal surface S102 in a centripetal direction with respect to axis X6. The sealing flange may also extend up to an immediate vicinity of front sleeve part 6, without contacting the latter. This means that a distance, measured radially, between the free radial end of the sealing flange and the external surface of the sleeve is between 0.1 mm and 10 mm.

Sealing flange does then not contact front sleeve part 6 nor inner ring, as it would induce friction.

In a non-represented alternative embodiment, sleeve parts 4 and 6 are integral.

In a non-represented alternative embodiment, pulley device 2 only includes one rolling bearing.

The technical features of the different embodiments and alternative embodiments of the invention described here-above can be combined together to generate new embodiments of the invention.

## Claims

1. Pulley device (2) for a drive element, comprising :
- at least one sleeve (4 , 6), that is configured to receive a screw for fastening the pulley device to a support,
- at least one rolling bearing (8, 10), arranged coaxially around the sleeve and comprising an inner ring (82, 102) and an outer ring (80, 100), and
- a pulley (12), that is adapted to cooperate with the drive element and that is secured in rotation, around a central axis (X12), with the outer ring of each rolling bearing,
**characterized in that**:
- the pulley device further comprises a sealing flange (64), that extends on a side of the bearing in a centrifugal direction at least up to the outer ring (100) or in a centripetal direction at least to the inner ring (102), and
- the sleeve (4 , 6) delimits a housing (62) for receiving the screw head.

2. Pulley device according to claim 1, **characterized in that** the sealing flange (64) is integral with the sleeve (6) and extends, centrifugally with respect to a central axis (X6) of the sleeve, towards the outer ring (100).

3. Pulley device according to claim 2, **characterized in that** a radial distance (d) between the sealing flange (64) and the pulley (12) is comprised between 0.1 mm and 10 mm.

4. Pulley device according to claim 2 or 3, **characterized in that** the sealing flange (64) does not contact the pulley (12) nor the outer ring (100).

5. Pulley device according to claim 1, **characterized in that** the sealing flange is integral with the pulley (12) and extends, centripetally with respect to a central axis (X12) of the pulley, towards the inner ring (102).

6. Pulley device according to claim 5, **characterized in that** a radial distance between the sealing flange and the sleeve (4, 6) is comprised between 0.1 mm and 10 mm.

7. Pulley device according to claim 5 or 6, **characterized in that** the sealing flange does not contact the sleeve (4 , 6) nor the inner ring.

8. Pulley device according to any previous claim, **characterized in that** the sealing flange (64) is disposed on the same side of the bearing (10) than a housing (62) for receiving the screw.

9. Pulley device according to any previous claim, **characterized in that** the sleeve (4, 6) is bipartite.

10. Pulley device according to claim 9, **characterized in that** a first part (4) of the sleeve is adapted to penetrate into a second part (6) of the sleeve and **in that** the first part (4) of the sleeve includes an outer seal ring (42) for axially retaining the first part (4) within the second part (6).

11. Pulley device according to any previous claim, **characterized in that** each rolling bearing (8 , 10) includes a rolling chamber (84, 104) for receiving a series of rolling elements (9) that is delimited between the inner (82 , 102) and outer ring (80 , 100) and **in that** each roller bearing includes seal means for protecting the rolling chamber.

12. Pulley device according to any previous claim, **characterized in that** the housing (62) for receiving the screw head is formed by an internal beading (60) of the sleeve (6).

13. Pulley device according to any previous claim, **characterized in that** the sleeve includes an outer collar (40) for axially retaining the or each rolling bearing (8 , 10).

14. Pulley device according to any previous claim, **characterized in that** it includes two rolling bearings (8 , 10).
